# EUROPEAN PATENT APPLICATION

(11) **EP 4 686 974 A1**
(43) Date of publication of application: **04.02.2026**
(21) Application number: 25183215.0
(22) Date of filing: 17.06.2025
(51) Int. Cl.: G02B 6/44, F16G 11/00

(54) **CABLE RETAINING CLIP**

(30) Priority: 29.07.2024 GB 202411080
(71) Applicant: Technetix B.V., 3905 NR Veenendaal (NL)
(72) Inventor: DEAN, Kristian, Hassocks, BN6 9EB (GB); CHAPMAN, Paul, Hassocks, BN6 9EB (GB); COLWELL, Colin, Colorado Springs, 80921 (US)
(74) Representative: Willett, Christopher David

(57) **Abstract**

There is provided a cable clip (10) comprising at least one cable retaining portion (12, 44) and a boss (14, 14') formed with a channel (16) providing an interference fit for receiving a securing element (18), such as a nail or a screw. The cable retaining portion (12, 44) comprises a curved arm (22), a tab (26) to enable the curved arm to be opened up to receive a cable, and a barb (28) to assist with retaining a cable. The curved arm is shaped so as to be able to receive different profile cables.

## Description

### Field of the invention

This invention relates to a cable retaining clip and in particular such as clip for use with optical fiber cables.

### Background to the invention

Metal core cables for power and communication signals, usually made from copper encased in a plastics sheath, can be fixed quickly to a solid wall by using a plastic "C" profile clip. A retaining nail is hammered through the clip and into the wall whilst the clip is positioned over the cable. If the hammer accidently makes contact with the metal core cable whilst fixing the cable to the wall, there is unlikely to be any significant damage due to the durability of the metal core and plastic sheath.

Fiber optic cables used for communication signal distribution have a glass-fiber inner that is protected by a plastic sheath. However, the glass is far less durable than metal and any contact with a hammer blow could break the internal fiber(s), rendering the cable useless. As a result fiber optic cables are usually mounted to walls by first screwing a cable tie base to the wall, fitting a cable tie through the base and finally securing the cable tie around the fiber-optic cable. Using the cable tie method avoids damaging the fiber, but is time consuming, particularly if mounted on a solid wall as a screw hole must be pre-drilled and lined and the screw must be held carefully when inserted into the cable tie base.

### Summary of the invention

In accordance with the invention, there is provided a cable clip comprising at least one cable retaining portion and a boss formed with a channel for receiving a securing element, such as a nail or a screw, wherein the channel is formed to provide an interference fit with the securing element, thereby to hold the securing element in position prior to affixing the cable clip to a surface. The securing element is thus held in position and is already positioned ready for hammering/ screwing into position. This avoids a worker needing to pick up a small securing element and insert it at the correct angle into the channel, whilst simultaneously holding the clip in position on a surface, which is difficult to do without dropping the securing element. This greatly simplifies positioning the clip as a worker only has to worry about correctly positioning the clip. Such a cable clip is preferably configured for use with fiber cable, such as is used in fiber optic installations.

The cable clip may comprise two cable retaining portions so as to secure two cables separately, and preferably the or each cable retaining portion is formed from flexible plastics material.

The or each cable retaining portion preferably comprises a curved arm, a tab depending outwardly from the curved arm so as to enable the curved arm to be opened up to receive a cable.

A portion of the tab may extend inwardly so as to form a barb to assist with retaining a cable.

Preferably the curved arm comprises a first set of two opposing arches and a second set of two opposing arches, each set of opposing arches having a different arch height so that the cable receiving portion is able to receive different profile cables.

The first set of two opposing arches may be capable of receiving circular cross-section cables and the second set of two opposing arches may be capable of receiving rectangular or flattened oval cables.

The tab may extend away from the boss, or extend towards the boss.

The invention will now be described, by way of example, with reference to the following drawings in which:
Figure 1 shows a perspective view of a first embodiment of a cable clip in accordance with the invention;
Figure 2 shows a section through the clip of Figure 1;
Figure 3 shows a side view of the first embodiment used to retain a flat profile or ovoid cable;
Figure 4 shows a side view of the first embodiment used to retain a circular profile cable;
Figure 5 shows a perspective view of a second embodiment of the clip;
Figure 6 shows a perspective view of a third embodiment of the clip capable of retaining two cables; and
Figure 7 shows a perspective view of a fourth embodiment of the clip capable of retaining two cables.

### Description

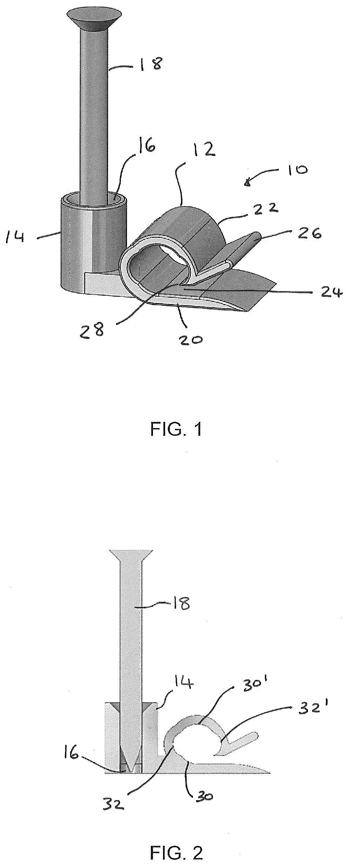

A cable clip 10 as shown in Figure 1, and typically moulded as one piece from plastics material, comprises an openable cable retaining portion 12 attached to an upright boss 14 with a central channel 16 that grips and secures a metal fixing 18, such as a nail or a screw, by means of an interference fit, as shown in Figure 2. Thus the captive metal fixing 18 is already held in a fixed position relative to cable clip 10 before the cable clip is secured into position by hammering or screwing into a surface. Where fixing 18 is a screw, channel 16 is modified to hold the screw whilst also allowing the screw to be rotated into place when mounting.

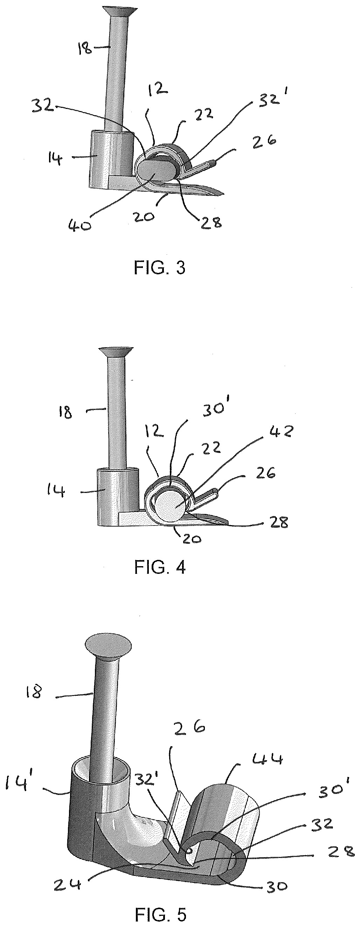

Cable retaining portion 12 comprises base 20 and flexible curved arm 22 facing away from boss 14 and designed to secure a cable. At open end 24 of arm 22, there is positioned tab 26 extending outwardly from open end 24 and away from boss 16 so as to act as a guide for positioning cables and also grippable to be urged away from base 20 so as to enlarge open end 24 when inserting a cable. A portion 28 of tab 26 extends inwardly to form a barb 28 that fits partially under a cable to hold the cable in place, see Figures 3 and 4.

Cable retaining portion 12 is shaped to provide two opposing pairs of arches 30, 30' and 32, 32'. Each pair of arches is configured with a different height so that cable retaining portion 12 provides a grippable surface for two different profiles of cable as shown in Figures 3 and 4. Arch pair 32, 32' are formed as higher arches and so are capable of gripping a flat or ovoid profile cable 40, see Figure 3. Arch pair 30, 30' are formed as shorter arches and so are capable of gripping a circular cross-section cable 42, see Figure 4.

As an alternative to the open ended cable clip shown in Figures 1 to 4, Figure 5 shows a second embodiment of the clip being a closed end cable clip where open end 24 of cable retaining portion 44 is positioned facing towards boss 14, with tab 26 extending from open end 24 towards boss 14'.

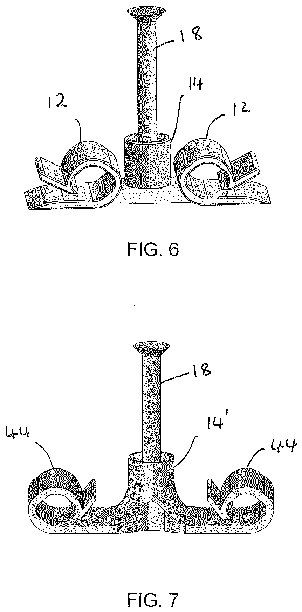

Figure 6 shows an embodiment where two open ended clip retaining portions 12 are attached to and disposed on opposing sides of boss 14, with Figure 7 showing a further embodiment where two closed end clip retaining portions 44 are attached to and disposed on opposing sides of boss 14'.

The clips above are particularly suited for securing round and flat profile fiber optic cables. The clips are pre-mounted to a surface before opening flexible curved arm 22 using tab 26 to insert fiber optic cables, so avoiding risk of damaging the fiber due to striking with an implement whilst the clip is mounted to a surface.

## Claims

1. A cable clip comprising at least one cable retaining portion and a boss formed with a channel for receiving a securing element, wherein the channel is formed to provide an interference fit with the securing element, thereby to hold the securing element in position prior to affixing the cable clip to a surface.

2. A cable clip according to claim 1, wherein the cable clip is configured for use with fiber cable.

3. A cable clip according to claim 1 or claim 2, wherein the cable clip comprises two cable retaining portions.

4. A cable clip according to any of the preceding claims, wherein the or each cable retaining portion is formed from flexible plastics material.

5. A cable clip according to any of the preceding claims, wherein the or each cable retaining portion comprises a curved arm, a tab depending outwardly from the curved arm so as to enable the curved arm to be opened up to receive a cable.

6. A cable clip according to claim 5, wherein a portion of the tab extends inwardly so as to form a barb to assist with retaining a cable.

7. A cable clip according to claim 5 or claim 6, wherein the curved arm comprises a first set of two opposing arches and a second set of two opposing arches, each set of opposing arches having a different arch height so that the cable receiving portion is able to receive different profile cables.

8. A cable clip according to claim 7, wherein the first set of two opposing arches is capable of receiving circular cross-section cables and the second set of two opposing arches is capable of receiving rectangular or flattened oval cables.

9. A cable clip according to any of the preceding claims, wherein the tab extends away from the boss.

10. A cable clip according to any of claims 1 to 8, wherein the tab extends towards the boss.
